# EUROPEAN PATENT SPECIFICATION

(11) **EP 1 219 112 B1**
(45) Date of publication and mention of the grant of the patent: **13.10.2004**
(21) Application number: 00946218.5
(22) Date of filing: 18.07.2000
(51) Int. Cl.: H04N 5/45

(54) **Interactive method for scheduling related to reception of event-related video signals and previews of events**
Interaktives Verfahren zur Vorgehensweise beim Empfang von Videosignalen und Vorschauinformation über Ereignisse
Procédé interactif de programmation relative à la réception de signaux vidéo et d'aperçus d'évènements prochainement diffusés

(30) Priority: 25.08.1999 US 382875
(43) Date of publication of application: 03.07.2002
(73) Proprietor: Spotware Technologies, Inc., San Diego, CA 92121-3030 (US)
(72) Inventor: COLBATH, Mark, Allan, MD SD-21 Poway, CA 92064 (US); WUGOFSKI, Theodore, David, Fort Worth, TX 76109 (US)
(74) Representative: Viering, Jentschura & Partner
(86) International application number: PCT/IB2000/000991
(87) International publication number: WO 2001/015438

(56) References cited:
- EP-A- 0 862 328
- WO-A-95/32587
- WO-A-96/31980
- WO-A-96/37996
- WO-A-97/49242
- WO-A-99/04561
- US-A- 5 483 278
- US-A- 5 822 123

## Description

### FIELD OF THE INVENTION

The present invention generally relates to the field of information handling systems, and particularly to receiving previews of future events with an information handling system.

### BACKGROUND OF THE INVENTION

Convergence systems typically receive a broadcast preview of an upcoming, future event. The upcoming event may be a television program, pay-per-view event, data service, or any such similar service. Scheduling information for the event being previewed is often encoded with the preview. The scheduling information may include the type of event, start time, end time, duration, channel, service identifier, and other similar characteristics. Broadcast signals may contain multiple components that are multiplexed for transmission and then demultiplexed by a receiving device such that the individual components may be reproduced as necessary by the receiving device. For example, a television signal may contain video, audio, and data components that are decoded by the receiving unit such that the video component may be sent to a display for displaying video information and the audio component may be sent to an amplifier and speaker system for reproducing audio information. The data component may include identifying information such as the station identification of the station broadcasting the signal that is not displayed on a display or reproduced by an amplifier and speaker system but which is decodable and may be interpreted by an appropriate receiving device. It would be highly desirable to provide a method and system that transmits an event preview along with the other components of a broadcast signal such that a receiving device may decode the components, store and/or display the event preview, and schedule or bookmark the event such that a user may record the event or be reminded of the time, station, etc. of the event as desired.

From WO 99/0461 an electronic program guide is known which is improved, among other things in improved viewer interaction capabilities with the EPG, improved viewer control of video recording of future-scheduled programming.

From WO 96/37996 is known to arrange a receiver for television signals to receive video signals comprising video data and information data.

From WO 96/31980 it is known to provide interactive program guide systems and related processes, which can automatically tne a televisio, or program a VCR, based on program selections made from program schedule information displayed on a television or other suitable video monitor.

From WO 95/32587 a system interactively controlled by a TV viewer remote control transmitter is known which displays, on demand by the viewer and on the viewer's display screen, descriptive data and a video clip related to a program identified on the program guide.

From WO 97/49242 a television schedule system and method for displaying television schedule information on a television screen is known, which includes a program guide having a schedule information area that depicts the programs that are being presented on each channel at each time during the day.

From US 5 822 123 an electronic program schedule system which includes a receiver for receiving broadcast, satellite or cablecast television programs for a plurality of television channels and a tuner for tning a television receiver to a selected one of the plurality of channels.

### SUMMARY OF THE INVENTION

The present invention is, as described in the claims, directed to a method for scheduling an event related to a preview. In one embodiment, the method includes steps for receiving a transmitted signal, the transmitted signal comprising a video component and a data component, the data component including a preview of the event including a date and time of the event, decoding the television signal whereby the video component may be displayed on a display and the data component may be interpreted. The preview is stored in a database upon a determination by the user not to display the preview and subsequently the preview is retrieved from the database and displayed on the display at a future time. If it is determined to display the preview, then the method further comprises the steps of displaying the preview on the display, determining whether to schedule the event based upon the preview, and if so determined, then scheduling the event. The event is an upcoming television event and said preview is a commercial for the upcoming television event comprising video and audio clips associated with said event.

It is to be understood that both the forgoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

### BRIEF DESCRIPTION OF THE DRAWING

The numerous advantages of the present invention may be better understood by those skilled in the art by reference to the accompanying figures in which:
FIG. 1 is a block diagram of an information handling system operable to embody the present invention;
FIG. 2 is a block diagram of a system for scheduling events related to television previews in accordance with the present invention; and
FIG. 3 is a flow diagram of a method for scheduling an event related to a preview in accordance with the present invention.

### DETAILED DESCRIPTION OF THE INVENTION

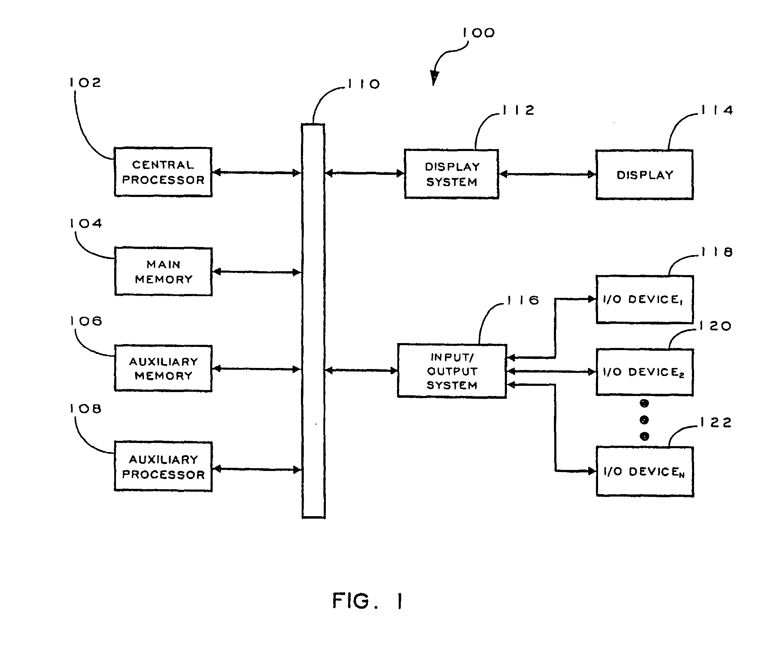

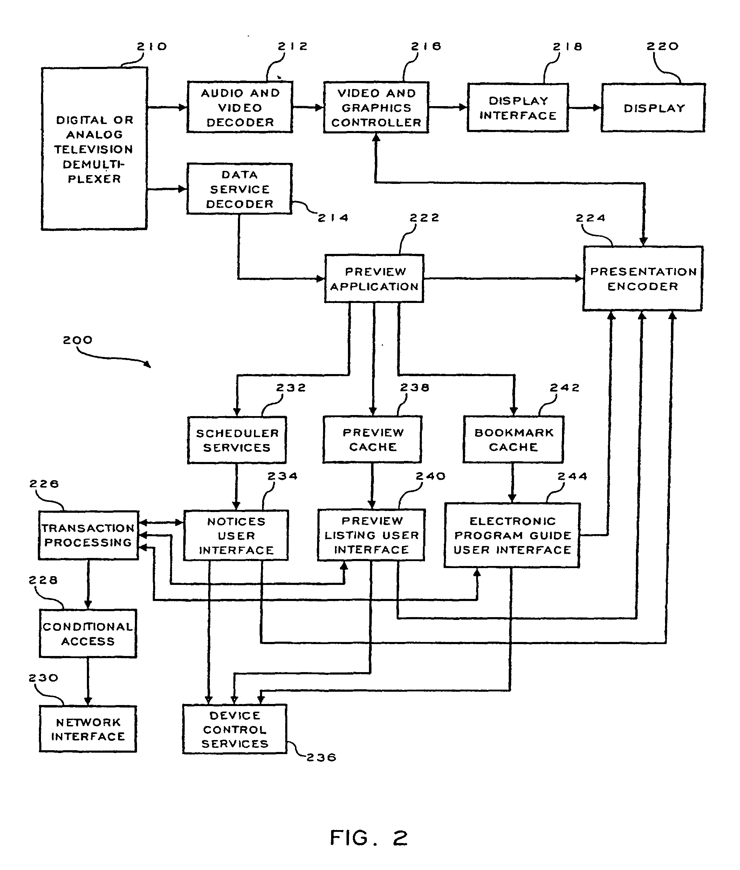

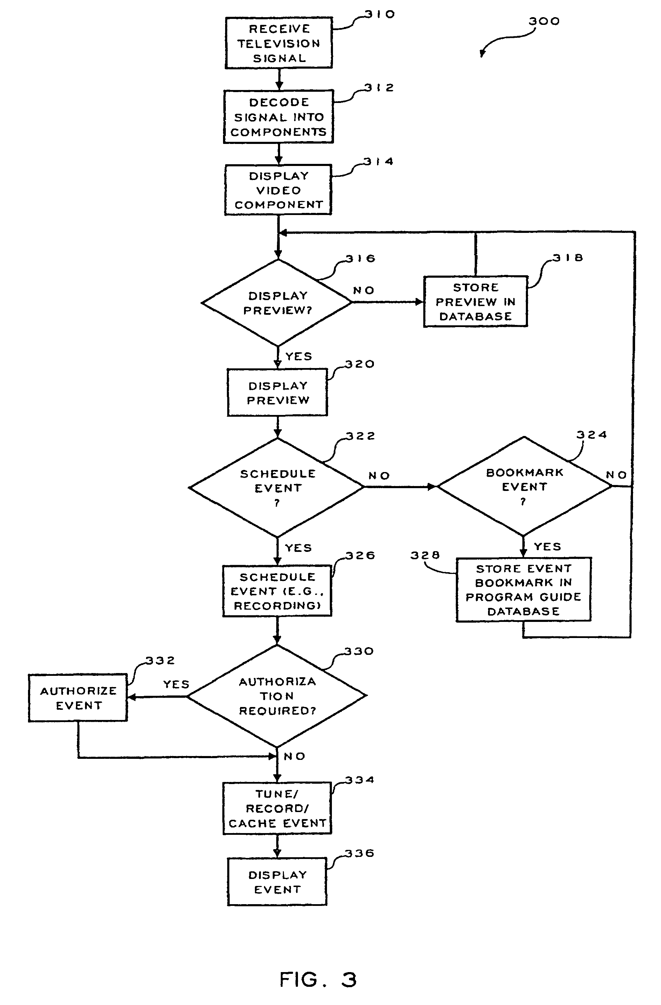

Reference will now be made in detail to the presently preferred embodiment of the invention, an example of which is illustrated in the accompanying drawings.
Referring now to FIG. 1, a hardware system in accordance with the present invention is shown. The hardware system shown in FIG. 1 is generally representative of the hardware architecture of an information handling system of the present invention. A central processor 102 controls the information handling system 100. Central processor 102 includes a central processing unit such as a microprocessor or microcontroller for executing programs, performing data manipulations and controlling the tasks of information handling system 100. Communication with central processor 102 is implemented through a system bus 110 for transferring information among the components of information handling system 100. Bus 110 may include a data channel for facilitating information transfer between storage and other peripheral components of information handling system 100. Bus 110 further provides the set of signals required for communication with central processor 102 including a data bus, address bus, and control bus. Bus 110 may comprise any state of the art bus architecture according to promulgated standards, for example industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and so on. Furthermore, bus 110 may be compliant with any promulgated industry standard. For example, bus 110 may be designed in compliance with any of the following bus architectures: Industry Standard Architecture (ISA), Extended Industry Standard Architecture (EISA), Micro Channel Architecture, Peripheral Component Interconnect (PCI), Universal Serial Bus (USB), Access.bus, IEEE P1394, Apple Desktop Bus (ADB), Concentration Highway Interface (CHI), Geo Port, or Small Computer Systems Interface (SCSI), as examples.
Other components of information handling system 100 include main memory 104, auxiliary memory 106, and an auxiliary processor 108 as required. Main memory 104 provides storage of instructions and data for programs executing on central processor 102. Main memory 104 is typically semiconductor based memory such as dynamic random access memory (DRAM) and or static random access memory (SRAM). Auxiliary memory 106 provides storage of instructions and data that are loaded into the main memory 104 before execution. Auxiliary memory 106 may include semiconductor based memory such as read-only memory (ROM), programmable read-only memory (PROM) erasable programmable read-only memory (EPROM), electrically erasable read-only memory (EEPROM), or flash memory (block oriented memory similar to EEPROM). Auxiliary memory 106 may also include a variety of non-semiconductor based memories, including but not limited to magnetic tape, drum, floppy disk, hard disk, optical, laser disk, compact disc read-only memory (CD-ROM), digital versatile disk read-only memory (DVD-ROM), digital versatile disk random-access memory (DVD-RAM), etc. Other varieties of memory devices are contemplated as well. Information handling system 100 may optionally include an auxiliary processor 108 which may be a digital signal processor (a special-purpose microprocessor having an architecture suitable for fast execution of signal processing algorithms), a back-end processor (a slave processor subordinate to the main processing system), an additional microprocessor or controller for dual or multiple processor systems, or a coprocessor. Information handling system 100 further includes a display system 112 for connecting to a display device 114, and an input/output (I/O) system 116 for connecting to one or more I/O devices 118, 120, and up to N number of I/O devices 122. Display system 112 may comprise a video display adapter having all of the components for driving the display device, including video random access memory (VRAM), buffer, and graphics engine as desired. Display device 114 may comprise a cathode ray-tube (CRT) type display such as a monitor or television, or may comprise alternative type of display technologies such as a liquid-crystal display (LCD), a light-emitting diode (LED) display, or a gas or plasma display. Input/output system 116 may comprise one or more controllers or adapters for providing interface functions between one or more of I/O devices 118-122. For example, input/output system 116 may comprise a serial port, parallel port, infrared port, network adapter, printer adapter, radio-frequency (RF) communications adapter, universal asynchronous receiver-transmitter (UART) port, etc., for interfacing between corresponding I/O devices such as a mouse, joystick, trackball, trackpad, trackstick, infrared transducers, printer, modern, RF modem, bar code reader, charge-coupled device (CCD) reader, scanner, compact disc (CD), compact disc read-only memory (CD-ROM), digital versatile disc (DVD), video capture device, touch screen, stylus, electroacoustic transducer, microphone, speaker, etc. Input/output system 116 and I/O devices 118-122 may provide or receive analog or digital signals for communication between information handling system 100 of the present invention and external devices, networks, or information sources.
Input/output system 116 and I/O devices 118-122 preferably implement industry promulgated architecture standards, including Recommended Standard 232 (RS-232) promulgated by the Electrical Industries Association, Infrared Data Association (IrDA) standards, Ethernet IEEE 802 standards (e.g., IEEE 802.3 for broadband and baseband networks, IEEE 802.3z for Gigabit Ethernet, IEEE 802.4 for token passing bus networks, IEEE 802.5 for token ring networks, IEEE 802.6 for metropolitan area networks, 802.11 for wireless networks, and so on), Fibre Channel, digital subscriber line (DSL), asymmetric digital subscriber line (ASDL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on.
Referring now to FIG. 2, a block diagram of a system for scheduling events related to television previews in accordance with the present invention will be discussed. System 200 may be implemented by information handling system 100 as a hardware device of information handling system 100, a program of instructions (e.g., software) executed by information handling system 100, or by a combination of hardware and software. In the event of a program of instructions, the program of instructions configure information handling system 100 to implement system 200. Demultiplexer 210 receives a television signal and demultiplexes the signal if the signal is a digital signal, or decodes the signal if the signal is analog, into its elementary streams (e.g., audio, video, data, etc.). Decoder 212 decodes and digitizes the audio and video components of the signal. Data service decoder 214 decodes the data component of the signal and either executes instructions contained within the data or stores the data in a memory such as memory 104 or 106 as appropriate. Video and graphics controller 216 combines the video components of the signal with a graphics user interface and on-screen display or displays. Display interface 218 encodes the video and graphics into a display format. Display 220 displays the video and graphics in a format viewable by a user.
lf the television program contains preview information, a preview application program 222 executes the preview. Preview application 222 may be embedded in system 200 or may be a self-executing program broadcast as part of the television signal (i.e. the data component). A presentation encoder 224 generates a graphical user interface that is overlaid on, combined with, or replaces the video signal being displayed in display 220. Depending upon which functions are supported in the implementation by system 200, the user may select to schedule a recording at the time of the preview, operate on the preview at a later time, or set up a book mark in an electronic program guide (a database or program in which programming information is stored and accessed with or executed by information handling system 100).
The user may select to schedule a recording of the preview via execution of a scheduler services routine 232. If required, the user may need to purchase the event, or the user may be required to verify that the user has access rights to the event, for example by entering a password or code. In this case, scheduler 232 can immediately access the transaction processing routing 226 that thereupon interfaces with conditional access system 228. Some transaction systems and conditional access systems require a return channel by coupling with a remote server via network interface 230. When the scheduled event is triggered (at the appropriate time), a notices user interface 234 notifies the user of the event. Notices user interface 234 may also need to interface with transaction processing routine 226. The notification starts the recording by interfacing with device control routine 236.
lf the user selects (or alternatively system 200 only supports) to operate on previews at a later time, the preview information may be stored on system 200 in a preview cache or database 238. The preview information would include the scheduling information, but it may also include the audio, video, and graphics material. The user can access the cached information through a preview listing interface 240, preferably a graphical user interface, or record the last previewed event through a remote control button or graphical user interface displayed on display 220.
Further, the user may select (or alternatively system 200 may only support) to bookmark the event in an electronic program guide. This may result in a graphical indicator in the electronic program guide user interface 244, a separate graphical user interface containing bookmarked events, a reminder notification graphical user interface, or some combination thereof. Bookmarks are stored in a bookmark cache or database 242. The electronic program guide example is generated by electronic program guide user interface 244. Preview application 222 thus is capable of performing three basic operations that may be implemented independently or in any combination with one another. The operations include, but are not limited to, scheduling the recording or caching of the event, caching the preview information for later access, and storing a bookmark to the event in the electronic program guide. Each of these three applications may access a transaction system if necessary.
A user may optionally schedule the recording of an event during a commercial relevant to the event. For example, the preview may be broadcast as a commercial or in conjunction with a commercial. The user is not required to utilize an electric program guide for this type of function. Events may include television type events or scheduled data services. Preview information may be stored on information handling system 100 (e.g., in auxiliary memory 106 implementing preview cache 238) as the user sees the preview. At a later time, the user can display previously viewed previews and schedule a recording, buy the event, or schedule a reminder. The user can schedule a reminder for an event during a commercial relevant to the event.
Referring now to FIG. 3, a flow diagram of a method for scheduling an event related to a preview in accordance with the present invention is shown. The method 300 may be implemented as a program of instructions storable on a medium readable by information handling system 100 that cause information handling system to execute the steps of method 300. Method 300 begins when a signal such as a television signal is received at step 310. The signal is decoded into components at step 312 by demultiplexer 210. The video component of the signal is displayed on display 220 at step 314. Further, an audio component of the signal may be reproduced through an amplifier and speaker system simultaneously with the displaying of the video component e.g., where the audio component of the signal is intended to accompany the video component of the signal (not shown). A determination is made at step 316 whether to display a preview received as a component of the signal. In the event it is determined not to display the preview, the preview may be stored at step 318 in a database or other storage medium of information handling system 100 such as main memory 104 or auxiliary memory 106. If it is determined to display the preview, the preview may be displayed at step 320 on display 220. Displaying step 320 may comprise displaying the preview in lieu of the video component of the signal, or may comprise displaying the preview simultaneously or in conjunction with the video component of the infonnation signal. For example, the preview may be displayed in a first picture or window while the video component is displayed in a second picture or window, or the preview and the video component may be displayed in a split screen view such that the preview is displayed on a first portion of display 220 and the video component is displayed on a second portion of the display (e.g., side-by-side).
The preview may contain information for an upcoming, future event. For example the preview may be for a sporting event to be televised at a future time. A determination is made at step 322 whether to schedule the event, for example scheduling information handling system 100 to record the event when the event is televised or broadcast. Alternatively, a reminder may be scheduled such that a user may be reminded that the event is occurring or will soon occur (not shown). In the event it is determined not to schedule the event, a determination is made at step 324 whether to bookmark the event. If it is determined not to bookmark the event, method 316 may continue with the step 316 of determining whether to display a successive preview. If there are no further previews, method may continue from step 314 by displaying the video component of the signal. In the event it is determined to bookmark the event, the event may be bookmarked in a database such as a program guide database 328 for future reference. Bookmarking of the event may include, for example, providing information pertaining to the source of the event such as the television station that broadcasts the event via the airwaves or a hyperlink to a server on a network such as the Internet that will broadcast or simulcast the event over the network.
In the event it is determined to schedule the event, the event may be scheduled at step 326. Scheduling step 326 may include, for example, programming information handling system 100 or a videocassette recorder (VCR) to program the recording of the event at the time and station or source of the event. A determination is made at step 330 whether authorization of viewing or receiving the event is required. For example, the event may be a pay per view television event that requires the user to pay a television or cable company for the right or license to access and view the previewed event. In the event authorization is required, the user may authorize the event at step 332 by agreeing to pay for the event with the relevant entity or by securing payment by providing financial information e.g., a credit card number to the entity. In the event that no authorization is required, or after authorization, the event may be tuned and/or recorded at step 334. Simultaneously or subsequently, the event may be displayed on display 220 at step 336.
Although the invention has been described with a certain degree of particularity, it should be recognized that elements thereof may be altered by persons skilled in the art without departing from the scope of the invention. One of the embodiments of the invention can be implemented as sets of instructions resident in the main memory 104 of one or more computer systems configured generally as described in FIG. 1. Until required by the computer system, the set of instructions may be stored in another computer readable memory such as auxiliary memory 106 of FIG. 1, for example in a hard disk drive or in a removable memory such as an optical disk for utilization in a CD-ROM drive, a floppy disk for utilization in a floppy disk drive, a floptical disk for utilization in a floptical drive, or a personal computer memory card for utilization in a personal computer card slot. Further, the set of instructions can be stored in the memory of another computer and transmitted over a local area network or a wide area network, such as the Internet, when desired by the user. Additionally, the instructions may be transmitted over a network in the form of an applet (a program executed from within another application) or a servlet (an applet executed by a server) that is interpreted or compiled after transmission to the computer system rather than prior to transmission. One skilled in the art would appreciate that the physical storage of the sets of instructions or applets physically changes the medium upon which it is stored electrically, magnetically, chemically, physically, optically or holographically so that the medium carries computer readable information.

## Claims

1. A computer-based method for scheduling an event related to a preview, comprising:
• receiving a transmitted signal (310), the transmitted signal comprising a video component and a data component, the data component including a preview of an event including a date and time of the event;
• decoding the transmitted signal (312) whereby the video component may be displayed (314) on a display and the data component may be interpreted;
• storing the preview in a database (318) upon a determination by the user not to display the preview (316), and subsequently retrieving the preview from the database and displaying it on the display at a future time, wherein the displaying, is done in an overlaying mode, a combining mode or a replacement mode with respect to the video component, the preview on the display (320) upon a determination by a user (316) to display the preview;
• taking an action (326, 328) upon a determination (322, 324) by the user to take an action based upon the displayed preview of the event;
• wherein said event is an upcoming television event and said preview is a commercial for the upcoming television event comprising video and audio clips associated with said event.

2. The computer-based method as claimed in claim 1, further comprising the steps of bookmarking the event (328) upon a determination by the user to bookmark the event (324), and accessing the event via the bookmark.

3. The computer-based method as claimed in claim 1, further comprising the step of authorizing the event (332) upon a determination by the user to authorize the event.

4. The computer-based method as claimed in claim 1, further comprising the step of recording the event (334) upon a determination by the user to record the event.

5. The computer-based method as claimed in claim 1, further comprising the step of tuning the display to the event at the date and time of the event.

6. The computer-based method as claimed in claim 1, said taking an action includes the step of scheduling a reminder of the date and time of the event, the method further comprising the step of providing a reminder of the event to a user.

## Patentansprüche

1. Computerbasiertes Verfahren zur zeitlichen Einplanung eines Ereignisses, welches sich auf eine Vorschau bezieht, aufweisend:
• Empfangen eines übertragenen Signals (310), wobei das übertragene Signal eine Video-Komponente und eine Daten-Komponente aufweist, wobei die Daten-Komponente eine Vorschau auf ein Ereignis, aufweisend Datum und Zeit des Ereignisses, aufweist;
• Dekodieren des übertragenen Signals (312), wobei die Video-Komponente auf einem Display angezeigt werden kann (314) und die Daten-Komponente ausgewertet werden kann;
• Speichern der Vorschau in einer Datenbank (318) auf eine Entscheidung hin des Benutzers die Vorschau nicht anzuzeigen (316), und anschließend Abfragen der Vorschau von der Datenbank und Anzeigen der selben auf einem Display zu einem späteren Zeitpunkt, wobei das Anzeigen der Vorschau in einem Überlappungs-Modus, einem Kombinierungs-Modus oder in einem ersetzenden Modus in Bezug auf die Video-Komponente ausgeführt wird, wobei die Vorschau auf einem Display (320) auf eine Entscheidung hin des Benutzers (316), die Vorschau anzuzeigen, ausgeführt wird;
• Durchführen einer Aktion (326, 328) auf eine Entscheidung (322, 324) hin des Benutzers eine Aktion basierend auf der angezeigten Vorschau des Ereignisses durchzuführen;
• wobei das Ereignis ein anstehendes Fernseh-Ereignis ist, wobei die Vorschau eine Werbung für das anstehende Fernseh-Ereignis ist, welche die dem Ereignis zugehörigen Video- und Audio-Clips aufweist.

2. Computer basiertes Verfahren gemäß Anspruch 1, wobei dieses ferner die Schritte des Versehens des Ereignisses mit einem Bookmark (328) auf eine Entscheidung des Benutzers, das Ereignis mit einem Bookmark zu versehen (324), und das Zugreifen auf das Ereignis mittels des Bookmarks, aufweist.

3. Computer basiertes Verfahren gemäß Anspruch 1, wobei dieses ferner den Schritt des Autorisierens des Ereignisses (332) auf eine Entscheidung hin des Benutzers, das Ereignis zu autorisieren, aufweist.

4. Computer basiertes Verfahren gemäß Anspruch 1, wobei dieses ferner den Schritt des Aufzeichnens des Ereignisses (334) auf eine Entscheidung hin des Benutzers, das Ereignis aufzuzeichnen, aufweist.

5. Computer basiertes Verfahren gemäß Anspruch 1, wobei dieses ferner den Schritt des Einstellens des Displays auf das Ereignis zu dem Datum und der Zeit des Ereignisses aufweist.

6. Computer basiertes Verfahren gemäß Anspruch 1, wobei das Durchführen einer Aktion den Schritt des zeitlichen Einplanens einer Erinnerung des Datums und der Zeit des Ereignisses aufweist, wobei das Verfahren ferner den Schritt des Bereitstellens einer Erinnerung des Ereignisses an einen Benutzer, aufweist.

## Revendications

1. Procédé informatique pour programmer un évènement en liaison avec un aperçu, comprenant :
• la réception d'un signal émis (310), le signal émis comprenant une composante vidéo et une composante de données, la composante de données incluant un aperçu d'un évènement, incluant une date et une heure de l'évènement ;
• le décodage du signal émis (312), au moyen duquel la composante vidéo peut être affichée (314) sur un écran et la composante de données peut être interprétée ;
• le stockage de l'aperçu dans une base de données (318), sur décision de l'utilisateur de ne pas afficher l'aperçu (316), et la récupération ultérieure de l'aperçu à partir de la base de données, et l'affichage de celui-ci sur l'écran à un moment avenir, dans lequel l'affichage est fait en mode superposition, en mode combinaison ou en mode remplacement, en fonction de la composante vidéo, de l'aperçu sur l'écran (320) sur décision de l'utilisateur (316) d'afficher l'aperçu ;
• l'exécution d'une action (326, 328) sur décision (322, 324) de l'utilisateur d'exécuter une action à partir de l'aperçu affiché de l'évènement ;
• dans lequel ledit événement est un évènement télévisé à venir et ledit aperçu est une publicité pour l'évènement télévisé à venir comprenant des clips audio et vidéo associés audit événement.

2. Procédé informatique selon la revendication 1, comprenant en outre les étapes consistant à la mise en signet de l'évènement (328), sur décision de l'utilisateur de mettre un signet de l'évènement (324), et à accéder à l'évènement par l'intermédiaire du signet.

3. Procédé informatique selon la revendication 1, comprenant en outre l'étape consistant à autoriser l'évènement (332), sur décision de l'utilisateur d'autoriser l'évènement.

4. Procédé informatique selon la revendication 1, comprenant en outre l'étape consistant à enregistrer l'évènement (334), sur décision de l'utilisateur d'enregistrer l'évènement.

5. Procédé informatique selon la revendication 1, comprenant en outre l'étape consistant à régler l'affichage pour l'évènement à la date et à l'heure de l'évènement.

6. Procédé informatique selon la revendication 1, ladite exécution d'une action inclut l'étape consistant à programmer un rappel de la date et de l'heure de l'évènement, le procédé comprenant en outre l'étape consistant à fournir un rappel de l'évènement à un utilisateur.
